# EUROPEAN PATENT APPLICATION

(11) **EP 4 053 170 A1**
(43) Date of publication of application: **07.09.2022**
(21) Application number: 20881729.6
(22) Date of filing: 20.08.2020
(51) Int. Cl.: C08F 10/02, C08J 11/10, C08L 23/06, C08K 3/016, C08K 3/22, C08K 3/26, H01B 3/44, H01B 7/02, C08F 8/00

(54) **DECROSSLINKED POLYOLEFIN RESIN FOR CABLE FILLER AND RESIN COMPOSITION COMPRISING SAME**

(30) Priority: 28.10.2019 KR 20190134366
(71) Applicant: LS Cable & System Ltd., Anyang-si, Gyeonggi-do 14119 (KR)
(72) Inventor: SHIN, Jung In, Hwaseong-si Gyeonggi-do 18357 (KR); NAM, Gi Joon, Seoul 06510 (KR); HEO, Sung Ik, Gunpo-si Gyeonggi-do 15874 (KR); SHIN, Ji Wook, Uiwang-si Gyeonggi-do 16036 (KR)
(74) Representative: advotec.
(86) International application number: PCT/KR2020/011078
(87) International publication number: WO 2021/085820

(57) **Abstract**

Provided is a decrosslinked polyolefin resin for a cable filler and a resin composition including the same. Specifically, the present invention relates to a decrosslinked polyolefin resin having excellent processability, shrinkage rate, flame retardancy, etc. and contributing to reducing manufacturing costs of a cable filler while satisfying high-level mechanical properties, such as tensile strength and an elongation rate, to be applied as a material of a cable filler, and a resin composition including the same.

## Description

### [Technical Field]

The present invention relates to a decrosslinked polyolefin resin for a cable filler and a resin composition including the same. Specifically, the present invention relates to a decrosslinked polyolefin resin having excellent processability, shrinkage rate, flame retardancy, etc. and contributing to reducing manufacturing costs of a cable filler while satisfying high-level mechanical properties, such as tensile strength and an elongation rate, to be applied as a material of a cable filler, and a resin composition including the same.

### [Background Art]

In a submarine cable having power line units (hereinafter referred to as "core parts") each including a conductor to transmit power and an optical unit, the core parts are disposed at a center of the submarine cable to be substantially symmetrical to each other and a protective layer is provided along edges of the core parts.

However, in the above configuration, because the core parts are provided, it may be difficult to maintain the roundness of the submarine cable, and particularly, when the submarine cable is laid or is wound about a turn table to be laid at the sea bottom, an external force such as external pressure may be applied to the submarine cable and thus the core parts in the submarine cable may be damaged. Therefore, a cable filler is required to maintain the roundness of the submarine cable and protect the core parts in the submarine cable when the submarine cable is laid or when an external force such as external pressure is applied to the submarine cable.

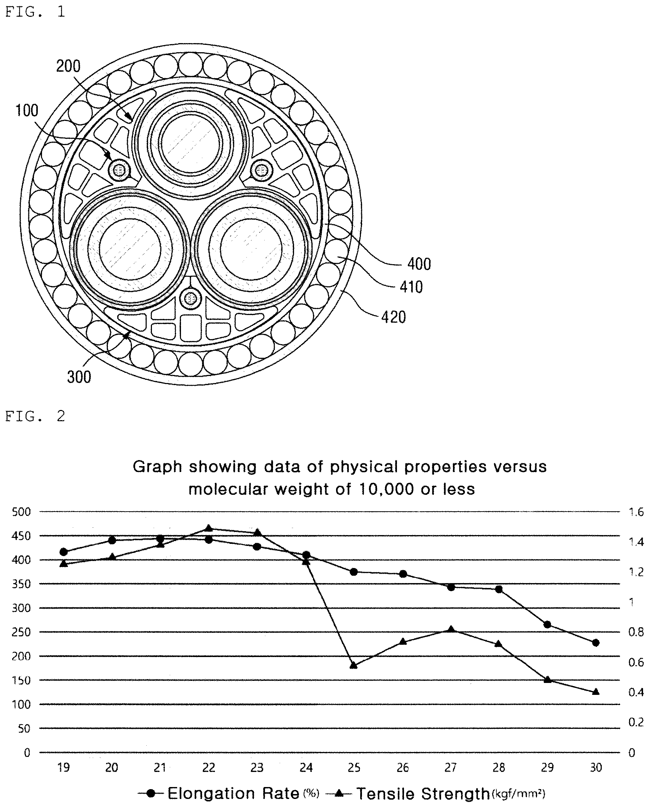

FIG. 1 is a schematic cross-sectional view of a cable with a cable filler of the related art.

As shown in FIG. 1, the cable with the cable filler may include one or more communication lines 100, one or more power lines 200, a cable filler 300 disposed between the communication lines 100 and the power lines 200 to maintain the roundness of the cable and protect the communication lines 100 and the power lines 200 from external impacts, a binder 400 covering all of the communication lines 100 and the power lines 200, a metal sheath 410, an outer jacket 420, etc.

However, the cable filler 300 of the related art has insufficient mechanical properties such as tensile strength and an elongation rate and thus may be crushed due to tension of steel wire during the manufacture of the metal sheath 410 of the cable, thereby preventing the roundness of the cable from being secured. Thus, the cable may be partially damaged due to nonuniform load on the cable during the transfer or laying of the cable. When a material having high tensile strength, a high elongation rate, etc. is used, processability, a shrinkage rate, flame retardancy, etc. may be insufficient or manufacturing costs of the cable filler 300 may increase.

Therefore, there is an urgent need for a material having excellent processability, shrinkage rate, flame retardancy, etc. and contributing to reducing manufacturing costs of a cable filler while satisfying high-level mechanical properties, such as tensile strength and an elongation rate, to be applied as a material of a cable filler.

### [Disclosure]

### [Technical Problem]

The present invention is directed to providing a decrosslinked polyolefin resin having excellent processability, shrinkage rate, flame retardancy, etc. and contributing to reducing manufacturing costs of a cable filler while satisfying high-level mechanical properties, such as tensile strength and an elongation rate, to be applied as a material of a cable filler, and a resin composition including the same.

### [Technical Solution]

According to an aspect of the present invention, provided is a decrosslinked polyolefin resin prepared to be recycled as a cable filler after crosslinking, wherein a weight-average molecular weight (Mw) is 50,000 or more, a polydispersity index (PDI) is in a range of 5 to 15, a gel fraction is 5 wt.% or less, and an amount of a resin having a molecular weight of 10,000 or less is greater than or equal to 5 wt.% and less than 25 wt.%, and an amount of a resin having a molecular weight of 500,000 or more is in a range of 2 to 10 wt.%, based on a total weight of the decrosslinked polyolefin resin.

According to another aspect of the present invention, provided is the decrosslinked polyolefin resin, wherein the amount of the resin having the molecular weight of 10,000 or less is greater than that of the resin having the molecular weight of 500,000 or more and is 34% or less of that of a resin having a molecular weight greater than 10,000 and less than 500,000.

According to other aspect of the present invention, provided is the decrosslinked polyolefin resin, wherein tensile strength is 1.3 kg/mm² or more and an elongation rate is 380% or more.

According to other aspect of the present invention, provided is the decrosslinked polyolefin resin, wherein weight-average molecular weight (Mw) is in a range of 50,000 to 250,000.

According to other aspect of the present invention, provided is the decrosslinked polyolefin resin, wherein the polyolefin resin comprises a polyethylene resin.

According to other aspect of the present invention, provided is the decrosslinked polyolefin resin, wherein the decrosslinked polyolefin resin is prepared by decrosslinking a crosslinked polyolefin resin using a supercritical fluid serving as a reaction solvent at reaction temperature of 250 to 350 °C and under reaction pressure of 5 to 30 MPa.

According to other aspect of the present invention, provided is the decrosslinked polyolefin resin, wherein the crosslinking is silane crosslinking, and silicon (Si) is contained in an amount of 0.05 to 2 wt.%, based on a total weight of the resin.

According to another aspect of the present invention, provided is a polyolefin resin composition comprising the decrosslinked polyolefin resin and a non-crosslinked polyolefin resin at a weight ratio of 5:95 or 50:50.

According to other aspect of the present invention, provided is the polyolefin resin composition, wherein weight-average molecular weight (Mw) is 50,000 or more and a polydispersity index (PDI) is 5 or more.

According to other aspect of the present invention, provided is the polyolefin resin composition, further comprising a compatibilizer, a flame retardant, an antioxidant, and a lubricant, wherein the flame retardant is contained in an amount of 50 to 200 parts by weight, based on 100 parts by weight of a mixture of the resin and the compatibilizer.

According to other aspect of the present invention, provided is the polyolefin resin composition, wherein the flame retardant comprises at least one inorganic flame retardant selected from the group consisting of aluminum hydroxide, magnesium hydroxide, calcium hydroxide, huntite (Mg₃Ca(CO₃)₄), and hydromagnesite (Mg₅(CO₃)₄(OH)₂).

According to another aspect of the present invention, provided is a cable filler formed of the polyolefin resin composition.

### [Advantageous Effects]

A decrosslinked polyolefin resin, for a cable filler, according to the present invention exhibits excellent processability, shrinkage rate, flame retardancy, etc. while satisfying high-level mechanical properties, such as tensile strength and an elongation rate, to be applied as a material of a cable filler, through precise control of a molecular weight distribution

In addition, the decrosslinked polyolefin resin for a cable filler according to the present invention is manufactured by decrosslinking a crosslinked resin to be recycled, thereby achieving an excellent effect of reducing manufacturing costs of a cable filler.

### [Description of Drawings]

FIG. 1 is a schematic cross-sectional view of a cable with a cable filler of the related art.
FIG. 2 is a graph showing tensile strength and an elongation rate of a resin having a molecular weight of 10,000 or less versus the amount of the resin, according to an embodiment of the present invention.

### [Mode for Invention]

Hereinafter, example embodiments of the present invention will be described in detail. The present invention is, however, not limited thereto and may be embodied in many different forms. Rather, the embodiments set forth herein are provided so that this disclosure may be thorough and complete and fully convey the scope of the invention to those skilled in the art.

The present invention relates to a polyolefin resin decrosslinked to be recycled as a material of a cable filler after crosslinking, and a resin composition including the same. Here, the "crosslinking" should be understood to include chemical crosslinking using a crosslinking agent such as an organic peroxide, silane crosslinking, irradiation crosslinking using electron beam irradiation, and the like.

A decrosslinked polyolefin resin for a cable filler according to the present invention may be prepared by decrosslinking a crosslinked polyolefin resin through a decrosslinking reaction to recycle the crosslinked polyolefin resin.

The decrosslinking reaction may be carried out, for example, using a supercritical fluid as a reaction solvent at a certain temperature and under a certain pressure condition. The decrosslinked polyolefin resin may show a molecular-weight distribution, and particularly, an amount of a low molecular-weight resin within a specific range and an amount of a high molecular-weight resin within a specific range, a gel fraction indicating a residual crosslinked portion, etc., which vary according to a temperature and pressure of the decrosslinking reaction. Thus, mechanical properties, extrudability, a shrinkage rate, etc. of a resin composition may vary greatly.

Specifically, a decrosslinked polyolefin resin for a cable filler according to the present invention is prepared by a decrosslinking process to which specific process conditions such as a temperature and pressure are applied, and thus, a resin having a molecular weight of 10,000 or less may be contained in an amount of greater than or equal to 5 wt.% or less than 25 wt.%, and preferably, 15 to 20 wt.%, through a precise control of a molecular weight distribution, and particularly, based on a total weight of the decrosslinked polyolefin resin, when it is assumed that a weight-average molecular weight (Mw) is 50,000 or more, e.g., 50,000 to 250,000, a polydispersity index (PDI) (Mw/Mn) is 5 or more, e.g., 5 to 15, and a gel fraction is 10% or less, e.g., 0.5 to 5 wt.%.

Furthermore, an amount of a low molecular-weight resin having a molecular weight of 10,000 or less may be greater than that of a high molecular-weight resin having a molecular weight of 500,000 or more and may be 34% or less, and preferably, 24.5% of less, of an amount of a resin having a molecular weight of greater than 10,000 and less than 500,000.

Here, when the amount of the resin having the molecular weight of 10,000 or less is less than 5 wt.%, an amount of a high molecular-weight resin having a molecular weight of greater than 10,000 may increase relatively and thus the viscosity, melting index, etc. of the decrosslinked polyolefin resin may reduce, thereby greatly reducing extrudability, whereas when the amount of the resin having the molecular weight of 10,000 or less is 25 wt.% or more, a decrosslinking reaction may occur at a high temperature greater than 350 °C during decrosslinking of a crosslinked polyolefin resin for preparation of the decrosslinked polyolefin resin. In this case, the tensile strength and elongation rate of the decrosslinked polyolefin resin may reduce greatly due to not only decrosslinking but also deterioration causing a main chain of a polymer to be broken.

Thus, the decrosslinked polyolefin resin of the present invention may achieve both tensile strength of 1.25 kg/mm² or more, and preferably, 1.3 kg/mm² or more, and an elongation rate of 200% or more, and preferably, 380% or more.

In addition, the decrosslinked polyolefin resin includes a resin having a molecular weight of 500,000 or more in an amount of 2 to 10 wt.%, and preferably, 2 to 3 wt.%, based on a total weight of the decrosslinked polyolefin resin and thus exhibits excellent mechanical properties such as tensile strength and an elongation rate, accurate dimensions due to a low shrinkage rate, excellent extrudability, etc., compared to non-crosslinked polyolefin resin. In particular, the resin having the high molecular weight is orientated in an orientation direction at a specific shear rate, e.g., about 100 s⁻¹ or more, during extrusion molding and thus total viscosity of the decrosslinked polyolefin resin decreases to be lower than that of the non-crosslinked polyolefin resin, thereby remarkably improving extrudability.

Here, when the PDI is less than 5 or the amount of the resin having the high molecular weight of 500,000 or more is less than 2 wt.% or greater than 20 wt.%, the total viscosity of the decrosslinked polyolefin resin at the specific shear rate or more does not reduce to be lower than that of the non-crosslinked polyolefin resin and thus extrudability may not be sufficient.

When the decrosslinked polyolefin resin, for a cable filler, of the present invention is obtained by decrosslinking after silane-crosslinking, a silane residue remaining in a polymer chain of the decrosslinked polyolefin resin may additionally improve flame retardancy of the decrosslinked polyolefin resin. Here, a chemical structure of the silane residue may be -SiOCH₃, -SiOH, -Si-O-Si- or the like.

In addition, the amount of silicon (Si) in the silane residue may be 0.05 to 2 wt.%, based on the total weight of the resin. When the amount of silicon (Si) is less than 0.05 wt.%, a degree of flame retardancy may be very low, whereas when the amount of silicon (Si) is greater than 2 wt.%, processability such as extrusion moldability and filler loadability may decrease and flame retardancy may also reduce.

In the decrosslinked polyolefin resin for a cable filler according to the present invention, the polyolefin resin may include an olefin homopolymer such as polyethylene or polypropylene or an olefin random or block copolymer obtained through polymerization of two or more olefin monomers, and preferably, polyethylene. The polyethylene may be ultra-low-density polyethylene (ULDPE), low-density polyethylene (LDPE), linear low-density polyethylene (LLDPE), medium-density polyethylene (MDPE), high-density polyethylene (HDPE), or a combination thereof.

The crosslinked polyolefin resin for a cable filler according to the present invention may be continuously prepared by decrosslinking a crosslinked polyolefin resin, for example, within a uniaxial compressor using a supercritical fluid serving as a reaction solvent, at a reaction temperature of 250 to 350 °C lower than a conventional decrosslinking reaction temperature, and under reaction pressure of 5 to 30 MPa.

The supercritical fluid used as a reaction solvent refers to a substance that is in a general liquid or gas state and reaches a critical state in which a gas and a liquid cannot be distinguished from each other when exceeding a high-temperature limit or a high-pressure limit. The supercritical fluid has a molecular density substantially the same as that of a liquid and viscosity lower than that of a gas, has a high diffusion rate and thus has thermal conductivity as high as thermal conductivity of water.

Therefore, when the supercritical fluid is used as a reaction solvent for a decrosslinking reaction, a solute concentration of a molten molecule, i.e., a solute concentration near a solute, may become extremely high, thus causing a decrosslinking reaction to occur. Distilled water, alcohol such as methanol or ethanol, or a mixture thereof may be used as the supercritical fluid.

The present invention relates to a polyolefin resin composition including the decrosslinked polyolefin resin.

The polyolefin resin composition according to the present invention may include the decrosslinked polyolefin resin and a non-crosslinked polyolefin resin that has never been crosslinked. Here, a weight ratio between the decrosslinked polyolefin resin and the non-crosslinked polyolefin resin may be about 5:95 or 50:50.

The polyolefin resin composition according to the present invention may have a weight-average molecular weight (Mw) of 50,000 or more and a PDI of 5 or more. Thus, the polyolefin resin composition may exhibit excellent mechanical properties and processability.

In addition, the polyolefin resin composition according to the present invention may further include an ethylene vinyl acetate (EVA) resin to additionally enhance filler loadability of an additive such as a flame retardant. Here, the amount of the EVA resin may be 25 to 50 parts by weight, based on 100 parts by weight of a mixture of a resin and a compatibilizer. When the amount of the EVA resin is less than 25 parts by weight, a degree of filler loadability is low, and when the amount of the EVA resin is greater than 50 parts by weight, mechanical and electrical properties of the polyolefin resin composition may decrease.

The polyolefin resin composition according to the present invention may include additives such as a flame retardant, an antioxidant, and a lubricant. The flame retardant may include at least one inorganic flame retardant selected from the group consisting of aluminum hydroxide, magnesium hydroxide, calcium hydroxide, huntite (Mg₃Ca(CO₃)₄), and hydromagnesite (Mg₅(CO₃)₄(OH)₂).

Inorganic particles such as magnesium hydroxide (Mg(OH)₂) available as the flame retardant has a hydrophile property of high surface energy, a resin such as polyolefin has a hydrophobic property of low surface energy, and thus the inorganic particles may have low dispersibility with respect to the resin and have a bad influence on mechanical and electrical properties of the resin. Therefore, in order to solve this problem, the inorganic particles such as magnesium hydroxide may be surface-treated with vinyl silane, stearic acid, oleic acid, aminopolysiloxane, a titanate coupling agent or the like.

When the inorganic particles are surface-treated with a vinyl silane or the like, a hydrolyzable group such as vinyl silane is attached to the surfaces of the inorganic particles such as magnesium hydroxide due to a condensation reaction, and a silane group reacts with the resin, thereby securing high dispersibility. The silane group may further improve the flame retardancy of the polyolefin resin composition.

The amount of the flame retardant may be 50 to 200 parts by weight, based on 100 parts by weight of the mixture of the resin and the compatibilizer. When the amount of the flame retardant is less than 50 parts by weight, sufficient flame retardancy may not be achieved, whereas when the amount of the flame retardant is greater than 200 parts by weight, the processability such as extrusion moldability of the polyolefin resin composition may reduce greatly. The other additives such as the antioxidant and the lubricant may be contained in an amount of 1 to 10 parts by weight, based on 100 parts by weight of the mixture of the resin and the compatibilizer.

### [Examples]

Table 1 below shows an amount of a resin per molecular weight, a molecular-weight distribution, and gel fraction of each of decrosslinked polyethylene resin compositions of examples and comparative examples, and a result of measuring tensile strength and an elongation rate of each of samples manufactured using the decrosslinked polyethylene resin compositions. In particular, a graph showing a result of measuring tensile strength and an elongation rate versus an amount of a resin having a molecular weight of 10,000 or less is as shown in FIG. 2.

**[Table 1]**

| | | Example | | | | | | Comparative example | | | | | |
|---|---|---|---|---|---|---|---|---|---|---|---|---|---|
| | | 1 | 2 | 3 | 4 | 5 | 6 | 1 | 2 | 3 | 4 | 5 | 6 |
| Amount of resin per molecula r weight (%) | 10,000 or less | 19 | 20 | 21 | 22 | 23 | 24 | 25 | 26 | 27 | 28 | 29 | 30 |
| | 10,000 to 500,000 | 79 | 76 | 74 | 75 | 75 | 74 | 72 | 73 | 72 | 71 | 70 | 69 |
| | 500,000 or more | 4 | 4 | 5 | 3 | 2 | 2 | 3 | 1 | 1 | 1 | 1 | 1 |
| 10,000 or less/ 10,000 to 500,000(%) | | 24 | 26 | 28 | 29 | 31 | 32 | 35 | 36 | 38 | 39 | 41 | 43 |
| Gel fraction (wt.%) | | 2.5 | 2.5 | 2.3 | 2.2 | 2.1 | 2.1 | 1.6 | 1.5 | 1.2 | 1.1 | 0.9 | 0.4 |
| Tensile strength (kgf/mm²) | | 1.334 | 1.411 | 1.423 | 1.419 | 1.36 8 | 1.31 2 | 1.2 | 1.19 | 1.09 8 | 1.08 8 | 0.85 | 0.73 |
| Elongation rate (%) | | 390 | 405 | 430 | 465 | 455 | 395 | 180 | 230 | 255 | 225 | 150 | 125 |

As shown in Table 1 above and FIG. 2, when it is assumed that weight-average molecular weight (Mw) is 50,000 or more, a PDI is 5 or more, and gel fraction is 10 wt.% or less, in examples 1 to 6, an amount of a resin having a molecular weight of 10,000 or less was controlled to be greater than or equal to 5 wt.% and less than 25 wt.% and thus tensile strength was 1.3 kg/mm² or more and an elongation rate was 380% or more, whereas in comparative examples 1 to 6, an amount of a resin having a molecular weight of 10,000 or less was 25 wt.% or more and thus tensile strength decreased to be less than 1.3 kg/mm², and particularly, an elongation rate decreased sharply.

While the present invention has been described above with respect to exemplary embodiments thereof, it would be understood by those of ordinary skilled in the art that various changes and modifications may be made without departing from the technical conception and scope of the present invention defined in the following claims. Thus, it is clear that all modifications are included in the technical scope of the present invention as long as they include the components as claimed in the claims of the present invention.

## Claims

1. A decrosslinked polyolefin resin prepared to be recycled as a cable filler after crosslinking, wherein a weight-average molecular weight (Mw) is 50,000 or more,
a polydispersity index (PDI) is in a range of 5 to 15,
a gel fraction is 5 wt.% or less, and
an amount of a resin having a molecular weight of 10,000 or less is greater than or equal to 5 wt.% and less than 25 wt.%, and an amount of a resin having a molecular weight of 500,000 or more is in a range of 2 to 10 wt.%, based on a total weight of the decrosslinked polyolefin resin.

2. The decrosslinked polyolefin resin of claim 1, wherein the amount of the resin having the molecular weight of 10,000 or less is greater than that of the resin having the molecular weight of 500,000 or more and is 34% or less of that of a resin having a molecular weight greater than 10,000 and less than 500,000.

3. The decrosslinked polyolefin resin of claim 1 or 2, wherein tensile strength is 1.3 kg/mm² or more and an elongation rate is 380% or more.

4. The decrosslinked polyolefin resin of claim 1 or 2, wherein weight-average molecular weight (Mw) is in a range of 50,000 to 250,000.

5. The decrosslinked polyolefin resin of claim 1 or 2, wherein the polyolefin resin comprises a polyethylene resin.

6. The decrosslinked polyolefin resin of claim 1 or 2, wherein the decrosslinked polyolefin resin is prepared by decrosslinking a crosslinked polyolefin resin using a supercritical fluid serving as a reaction solvent at reaction temperature of 250 to 350 °C and under reaction pressure of 5 to 30 MPa.

7. The decrosslinked polyolefin resin of claim 1 or 2, wherein the crosslinking is silane crosslinking, and
silicon (Si) is contained in an amount of 0.05 to 2 wt.%, based on a total weight of the resin.

8. A polyolefin resin composition comprising the decrosslinked polyolefin resin of claim 1 or 2 and a non-crosslinked polyolefin resin at a weight ratio of 5:95 or 50:50.

9. The polyolefin resin composition of claim 8, wherein weight-average molecular weight (Mw) is 50,000 or more and a polydispersity index (PDI) is 5 or more.

10. The polyolefin resin composition of claim 8, further comprising a compatibilizer, a flame retardant, an antioxidant, and a lubricant,
wherein the flame retardant is contained in an amount of 50 to 200 parts by weight, based on 100 parts by weight of a mixture of the resin and the compatibilizer.

11. The polyolefin resin composition of claim 10, wherein the flame retardant comprises at least one inorganic flame retardant selected from the group consisting of aluminum hydroxide, magnesium hydroxide, calcium hydroxide, huntite (Mg₃Ca(CO₃)₄), and hydromagnesite (Mg₅(CO₃)₄(OH)₂).

12. A cable filler formed of the polyolefin resin composition of claim 8.
